Europäisches Patentamt

European Patent Office

Office européen des brevets

(11) Veröffentlichungsnummer: **0 176 918**
**B1**

(12) **EUROPÄISCHE PATENTSCHRIFT**

(45) Veröffentlichungstag der Patentschrift:
05.07.89

(51) Int. Cl.⁴: **B 29 C 63/02**

(21) Anmeldenummer: 85112058.4

(22) Anmeldetag: 24.09.85

(54) Verfahren zum Bearbeiten und Aufbringen einer Schutzfolie auf eine Platte.

Teilanmeldung 87117427 eingereicht am 26.11.87.

(30) Priorität: 29.09.84 DE 3435906

(43) Veröffentlichungstag der Anmeldung:
09.04.86 Patentblatt 86/15

(45) Bekanntmachung des Hinweises auf die Patenterteilung:
05.07.89 Patentblatt 89/27

(84) Benannte Vertragsstaaten:
AT BE CH DE FR GB IT LI NL SE

(56) Entgegenhaltungen:
EP-A- 0 022 664
DE-U- 7 528 907
FR-A- 2 067 310
FR-A- 2 272 961
FR-A- 2 478 452
US-A- 2 710 046
US-A- 3 674 590
US-A- 3 936 567

(73) Patentinhaber: B.V. LEIDSE HOUTHANDEL v/h Kater en Wiethoff, Helmstraat 2, Maastricht (NL)

(72) Erfinder: Baus, Heinz Georg, Wartbodenstrasse 35, CH-3626 Hünibach-Thun (CH)

(74) Vertreter: Klose, Hans, Dipl.-Phys. et al, Kurfürstenstrasse 32, D-6700 Ludwigshafen (DE)

## Beschreibung

Die Erfindung bezieht sich auf ein Verfahren gemäss den im Oberbegriff von Patentanspruch 1 angegebenen Merkmalen.

Aus der US-A 3 674 590 ist ein derartiges Verfahren bekannt, um Kerne oder Stäbe mit einer Schutzfolie zu umwickeln. Es werden einzelne Stäbe, die eine vorgegebene Länge aufweisen, einem Förderband zugeführt und eine Schutzfolie wird auf diese einzelnen Stäbe aufgebracht. Mittels Schneidrollen werden in die Schutzfolie Schnittlinien entsprechend der vorgegebenen Länge der Kerne in der Weise eingebracht, dass diese Schnittlinien nach dem Aufbringen auf die Kerne genau im Bereich der Enden der einzelnen Kerne sich befinden. Die derart mit einer Schutzfolie umwickelten Kerne weisen in der Schutzfolie keinerlei Perforationslinien auf. Die Schutzfolie dient zur dauerhaften Beschichtung der Kerne und es ist keinerlei Hinweis zu entnehmen, nachfolgend bei der weiteren Verarbeitung Teilbereiche dieser Schutzfolie wieder von den Kernen zu lösen. Es wird lediglich unter Berücksichtigung der jeweiligen Gesamtlänge der einzelnen Kerne die Schutzfolie mit Trennungslinien versehen, welche exakt an den dicht aneinander liegenden Stirnflächen der nacheinander zugeführten Kerne zugeordnet werden.

Ferner ist aus der EP-A 22 664 eine dekorative Folie nachgewiesen, welche von einem Benutzer per Hand auf die Oberfläche einer Platte, eines Regalbrettes oder dgl. aufgeklebt werden kann. Vor dem Aufkleben weist die dekorative Folie eine grössere Fläche auf als die Platte. An der Unterseite der Folie befinden sich eine Klebeschicht sowie Trennungslinien. Die für einen Betrachter sichtbare und mit einem dekorativen Ornament versehene Oberfläche der Folie enthält hingegen keinerlei Trennungslinien. Die Tiefe der genannten Trennungslinien beträgt nur einen Bruchteil der gesamten Materialdicke der Folie. Durchgehende Löcher, Schnitte oder ähnliches sind nicht vorhanden. Die Folie wird von einem Benutzer zunächst mit entsprechendem Übermass auf die Oberfläche der Platte aufgeklebt und nachfolgend werden die überstehenden Teile, beispielsweise in Form von Streifen, abgelöst. Nachfolgend ist die gesamte Oberfläche der Platte für die gesamte Gebrauchsdauer mit dieser dekorativen Folie versehen. Es werden keinerlei Teilbereiche der Oberfläche nachfolgend wieder von der dekorativen Folie befreit, zumal für die gesamte Lebensdauer ein Oberflächenschutz und eine zuverlässige Verbindung der Schutzfolie erreicht werden soll.

Der Erfindung liegt die Aufgabe zugrunde, das eingangs genannte Verfahren derart weiterzubilden, dass einerseits eine Erleichterung bei der weiteren Bearbeitung des Bauteiles, beispielsweise beim Anbringen von Rahmenteilen oder Scharnieren, ermöglicht wird und andererseits die Schutzfunktion mittels der Schutzfolie für das Bauteil beibehalten werden kann.

Die Lösung dieser Aufgabe erfolgt gemäss den im Anspruch 1 angegebenen Merkmalen.

Das vorgeschlagene Verfahren ist mit einem geringen Fertigungsaufwand durchführbar und es wird von der Herstellung des Bauteiles bis zum endgültigen Einsatz bei einem Endverbraucher ein guter Oberflächenschutz gewährleistet. Die Herstellung des Bauteiles kann in üblicher Weise mit Extrudern, Walzenanordnungen oder ähnlichem erfolgen, und es ist nur ein vergleichsweise geringer zusätzlicher apparativer Aufwand zum Aufbringen der mit Perforationslinien versehenen Schutzfolie erforderlich. Bereits bei der nachfolgenden Unterteilung in Platten und ferner bei der weiteren Bearbeitung wird mittels der Schutzfolie die Oberfläche der Platte vor Beschädigungen, Kratzern oder dgl. geschützt. Bei der Weiterverarbeitung werden die Bereiche, die ohne Schutzfolie zugänglich sein müssen, leicht und ohne wesentlichen Zeit- und Arbeitsaufwand freigelegt. Hierzu muss bei der Weiterverarbeitung die Schutzfolie lediglich entlang den Perforationslinien teilweise wieder abgelöst werden. An den derart freigelegten Bereichen können dann problemlos Beschläge, Rahmenprofile oder dgl. angebracht werden, ohne dass durch die Schutzfolie oder Reste derselben eine Beeinträchtigung der Funktionsfähigkeit der Verbindung zu befürchten ist. Im übrigen bleibt aber die Platte mittels der Schutzfolie geschützt. Die Perforationslinien sind in der Weise ausgebildet, dass die zum Ablösen eines Teilbereiches der Schutzfolie benötigte Kraft kleiner ist als die Adhäsions- oder Haltekraft der auf dem Bauteil noch verbleibenden Schutzfolie. Bei der weiteren Handhabung des Bauteiles und beim Transport bis hin zum Endverbraucher bleibt die Oberfläche der Platte vor Beschädigungen geschützt, wobei zusätzliche Massnahmen oder eine entsprechend aufwendige Verpackung entfallen können. Die auf der Oberfläche des Bauteiles verbliebenen Teile der Schutzfolie werden dann, beispielsweise nach dem endgültigen Einbau vor Ort, abgelöst. Da die Perforationslinien vor dem Aufbringen auf das Bauteil in die Schutzfolie eingebracht werden, ist eine Beschädigung des Bauteiles infolge der Perforationslinien selbst nicht zu befürchten.

In einer besonderen Ausgestaltung wird die Schutzfolie unmittelbar vor dem Aufbringen auf das Bauteil mit den Perforationslinien versehen. Die Schutzfolie kann als handelsübliche Rollenware von einem Lieferanten bezogen werden, und die Perforationslinien können entsprechend den jeweiligen Anforderungen in die Schutzfolie eingebracht werden, wobei ohne Schwierigkeiten auch Änderungen vorgenommen werden können. So brauchen lediglich die für die Erzeugung der Perforationslinien vorgesehenen Einrichtungen, die Messer oder ähnliches aufweisen, in die jeweils erforderliche Position gefahren werden.

Um in zuverlässiger Weise eine Beschädigung der Oberfläche durch die Perforationslinien zu vermeiden, wird die Schutzfolie mit der Innenfläche, in welche eine Perforiereinrichtung beim Perforieren einschneidet, auf die Oberfläche der Bahn aufgebracht. Obgleich Schutzfolien aus einem relativ weichen Material bestehen, können sich beim Perforieren auf der von der Perforiereinrichtung abgewandten Seite Grate bilden, die über die andere Oberfläche bzw. Aussenfläche der Schutzfolie etwas hervorstehen. Die Schutzfolie wird nicht mit ihrer Grate aufweisenden Aussenfläche aufgebracht, sondern mit ihrer, abgesehen von den Perforationen, glatten Innenfläche. Dies ist vor allem dann wichtig, wenn die Bahn aus einem extrudierbaren Kunststoff bei der kontinuierlichen Fertigung eine unter Umständen noch relativ weiche Oberfläche aufweist, welche durch die genannten Grate der Perforationslinien leicht beschädigt werden könnte. Durch die vorgeschlagene Anordnung der Schutzfolie werden in überraschend einfacher Weise derartige Beschädigungen zuverlässig vermieden.

Nach einer besonderen Ausführung wird auf die beiden Oberflächen der Bahn jeweils eine derartige Schutzfolie aufgebracht. Der insoweit erforderliche Arbeitsaufwand ist vergleichsweise klein, wobei für das Bauteil und insbesondere die Platte sozusagen ein allseitiger Schutz erreicht wird.

Eine besondere Ausgestaltung ist dadurch gekennzeichnet, dass die Perforationslinien ein Längenverhältnis von Löchern zu Stegen, welche zwischen den genannten Löchern liegen, grösser als 2:1 aufweist und bevorzugt bei 3:1 liegt. Durch die Vorgabe des Längenverhältnisses wird in einfacher Weise sichergestellt, dass beim Ablösen eines Teiles der Schutzfolie nur der gewünschte Teil oder Streifen abgelöst wird und im übrigen die Schutzfolie auf der Platte haften bleibt.

Eine weitere Ausgestaltung ist dadurch gekennzeichnet, dass die Schutzfolie mit einer Anzahl von in Längsrichtung und/oder in Querrichtung der Schutzfolie verlaufenden, einen wählbaren Abstand zueinander aufweisenden Perforationslinien versehen wird. Mittels der Perforationslinien wird die Schutzfolie in Streifen oder in Rechtecke unterteilt, so dass bei der Weiterbearbeitung bedarfsweise Streifen oder einzelne bzw. mehrere der genannten Rechtecke von der Platte wieder entfernt werden können. Die Abstände zwischen den Perforationslinien werden den Erfordernissen entsprechend vorgewählt, wobei sich in der Praxis Breiten von etwa 30 oder 40 Millimeter als besonders zweckmässig erwiesen haben. Sind die Perforationslinien in Längsrichtung und in Querrichtung vorgesehen, so können ohne Schwierigkeiten auch nur einzelne von derart gebildeten rechteckförmigen Teilen der Schutzfolie von der Platte abgelöst werden, um insbesondere Beschläge dort vorzusehen.

Die Erfindung bezieht sich ferner auf ein Bauteil, insbesondere plattenförmiges Wand- oder Türelement einer Duschabtrennung, gemäss den im Oberbegriff von Patentanspruch 6 angegebenen Merkmalen. Ein derartiges Bauteil soll dahingehend ausgebildet werden, dass einerseits eine stabile und zuverlässige Verbindung mit dem Rahmen, Beschlägen oder dgl. gewährleistet wird und andererseits das Bauteil im übrigen, und zwar insbesondere beim Transport, vor Beschädigungen geschützt wird.

Die Lösung dieser Aufgabe erfolgt gemäss den im Kennzeichen von Patentanspruch 6 angegebenen Merkmalen.

Ein derartiges Bauteil ist mit einem geringen Kostenaufwand zu fertigen, zumal die Platte einschliesslich Schutzfolie in einem kontinuierlichen Arbeitsprozess hergestellt werden kann. Bevor die Platte in den Rahmen eingesetzt oder die Beschläge aufgebracht werden, werden an den Rändern bzw. an den erforderlichen Stellen Teile der Schutzfolie entlang den dort vorhandenen Perforationslinien abgelöst. Der Arbeitsaufwand ist im Vergleich mit einem nachträglichen Aufbringen auf die bereits in einen Rahmen eingesetzte Platte nicht unerheblich geringer. Auch beim Befestigen der Rahmen oder der Beschläge bleibt, abgesehen von den von der Schutzfolie befreiten Stellen, die Oberfläche durch die noch vorhandene Schutzfolie geschützt. Die Schutzfolie wird von der Oberfläche erst nach der endgültigen Montage des Bauteiles vor Ort vollständig entfernt.

Eine weitere Ausgestaltung des Bauteiles ist im Patentanspruch 7 angegeben. Die Unterteilung der Schutzfolie in Streifen oder in rechteckförmige, insbesondere quadratische, Teilbereiche ermöglicht bei Bedarf ein problemloses Entfernen von der Oberfläche. Auch auf den vom Rahmen bzw. von Beschlägen des Bauteiles überdeckten Teilen der Oberfläche war zuvor die Schutzfolie vorhanden, die bei der Fertigung des Bauteils insoweit abgelöst worden ist.

Die Erfindung wird anhand von in der Zeichnung dargestellten Ausführungsbeispielen näher erläutert. Es zeigen:

Fig. 1 schematisch eine zur Durchführung des Verfahrens geeignete Vorrichtung,

Fig. 2 eine Platte, deren Schutzfolie durch eine Anzahl von Perforationslinien in Streifen unterteilt ist,

Fig. 3 ein mit der Platte gemäss Figur 2 gefertigtes Bauteil,

Fig. 4 eine Platte, deren Schutzfolie durch Perforationslinien in quadratische Bereiche unterteilt ist,

Fig. 5 ein mit der Platte gemäss Figur 4 gefertigtes Bauteil.

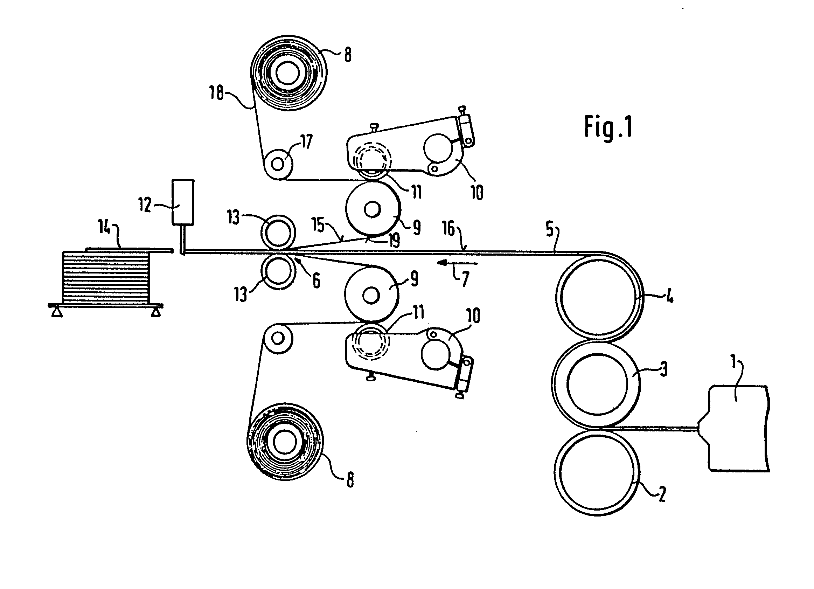

Fig. 1 zeigt eine schematische Darstellung einer zur Durchführung des Verfahrens vorgesehenen Vorrichtung, die Gegenstand der Teilanmeldung EP-A 0 274 628 ist, die einen Extruder 1 sowie eine Walzenanordnung zur Lieferung einer Bahn 5 aus einem thermoplastischen Kunststoff enthält. Die Walzenanordnung enthält drei vertikal übereinander angeordnete Walzen, und zwar eine untere Andruckwalze 2, eine mittlere Prägewalze 3 sowie eine obere Glättwalze 4. Von der Glättwalze 4 wird horizontal die derart gefertigte Kunststoff-Bahn 5 abgezogen. Die Bahn 5 wird in Richtung des Pfeiles 7 gefördert und im Zuführspalt 6 zweier Andruckrollen 13 mit je einer Schutzfolie 18 versehen, die von Rollen 8 abgewickelt werden. Der Abzug der Schutzfolie 18 von der Rolle 8 sowie Extruder und Walzenanordnung und Andruckrollen 13 sind in ihren Abzugsgeschwindigkeiten aufeinander abgestimmt. Die Bahn 5 wird gemeinsam mit den beiden Schutzfolien 18 in den Zuführspalt 6 eingeführt, wobei mittels der Andruckrollen 13 der erforderliche Anpressdruck aufgebracht wird.

Bei der dargestellten Ausführungsform wird die Bahn 5 auf ihren beiden Oberflächen, also auf der oberen und unteren Oberfläche, jeweils mit der Schutzfolie 18 versehen. Das Andruckrollenpaar 13 ist derart nahe der Walzenanordnung mit den Walzen 2, 3 und 4 aufgestellt, dass die in der Bahn noch befindliche Restwärme beim Aufbringen genutzt werden kann. Die beiden Schutzfolien 18 und die Bahn 5 werden gemeinsam dem Zuführspalt 6 gleichzeitig zugeführt, wobei durch die paarweise Anordnung und Ausnutzung der Restwärme auch nur ein relativ geringer Anpressdruck erforderlich wird.

Mittels einer Einrichtung 10 wird die zunächst geschlossene Schutzfolie 18 vor dem Aufbringen auf die Bahn 4 mit einer Perforation versehen. Hierfür enthält die Einrichtung 10 geeignete Messer 11 oder dergleichen, wobei die Perforation je nach Wunsch in Längsrichtung, und/oder auch in Querrichtung der Schutzfolie 18 aufgebracht werden kann.

Die beiden Perforiereinrichtungen 10 und Rollen usw. sind übereinstimmend ausgebildet, ebenso wie je eine Umlenkrolle 9, die nahe der Bahn 5 angeordnet sind. Die Umlenkrolle 9 befindet sich zwischen dem Messer 11 und der Bahn 5. Wichtig ist im Rahmen der Erfindung das Einbringen der Perforation von der Innenfläche 19 der Schutzfolie her, welche Innenfläche 19 direkt auf die Oberfläche 16 der Bahn 5 angeordnet wird. Beim Perforieren der zwar sehr dünnen Schutzfolie 18 entstehen nämlich auf der Aussenfläche 15 aufgrund der von der Innenseite 19 her durchdringenden Messer oder dergleichen Grate oder Erhebungen. Würden derartige Grate auf die noch relativ warme Oberfläche der Bahn 5 mittels der Andruckrollen 13 angedrückt, so liessen sich Beschädigungen in der Oberfläche der Bahn 5 und somit der zu fertigenden Platte kaum vermeiden. Ferner wird durch die vorgeschlagene Anordnung von Umlenkrolle 9, Schneidvorrichtung 10 sowie Andruckrollen 13 eine äusserst kompakte und platzsparende Bauweise geschaffen. Die Umlenkrollen 9, die Schneidvorrichtung 10, die Andruckrollen 13 und gegebenenfalls auch eine Zuführwalze 17 werden in einem gemeinsamen Maschinengerüst, das hier aus Gründen der Übersichtlichkeit nicht dargestellt ist, angeordnet. Es sei festgehalten, dass sämtliche Walzen, also sowohl für die von oben als auch für die von unten zuzuführende Schutzfolie in einem gemeinsamen Maschinengestell angeordnet sind.

Mittels einer nachgeordneten Schneidvorrichtung 12 wird dann in hinlänglich bekannter Weise die Bahn 4 einschliesslich der Schutzfolie 18 in Platten 14 der gewünschten Grösse geschnitten.

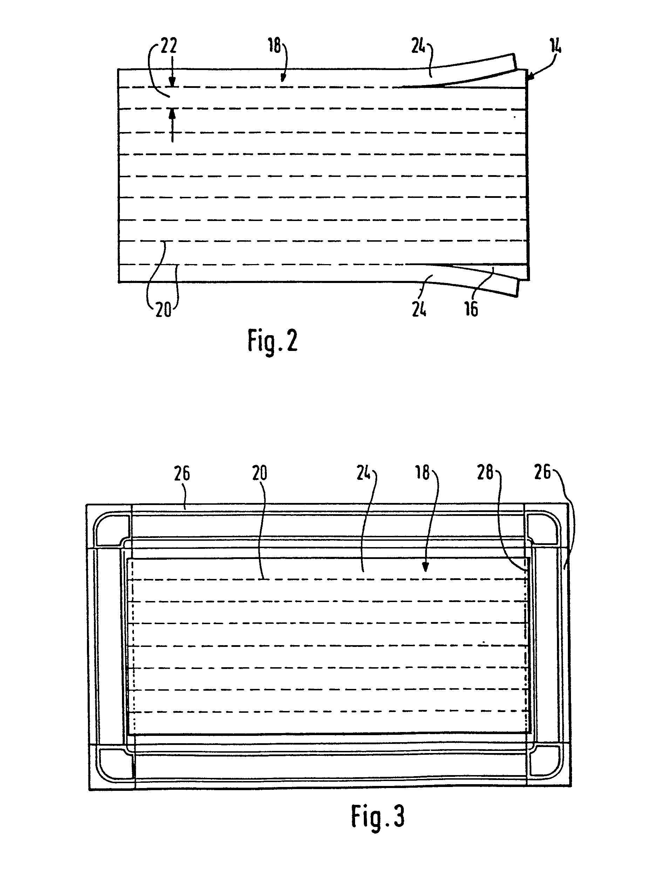

Fig. 2 zeigt eine Aufsicht auf eine Platte 14, auf deren Oberfläche 16 eine Schutzfolie 18 aufgebracht ist. Die Schutzfolie 18 weist eine Anzahl von Perforationen 20 auf, die in Längsrichtung der Platte 14 verlaufen und die zueinander einen vorgegebenen Abstand 22 aufweisen. Aufgrund der Perforationen 20 ist also die Schutzfolie 18 in eine Anzahl von Streifen 24 unterteilt, wobei gemäss Zeichnung die beiden äusseren Streifen 24 teilweise abgelöst sind.

Fig. 3 zeigt ein Bauteil, das einen Rahmen 26 aus vier rechtwinklig zueinander angeordneten Profilschienen aufweist. Die anhand von Fig. 2 erläuterte Platte ist in den Rahmen 26 in bekannter Weise eingebaut, wobei die oben erwähnten beiden äusseren Streifen der Schutzfolie 18 zuvor entfernt worden sind. Die Enden 28 der Schutzfolie 18 sind über die in der Zeichnung links und rechts befindlichen Profilschienen Rahmens 26 gelegt.

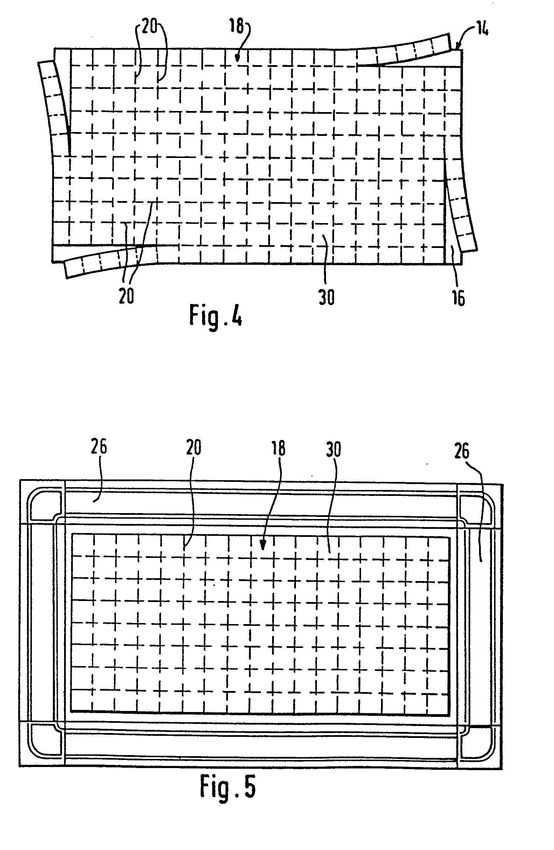

Fig. 4 zeigt eine Ausführungsform der Platte, wobei nunmehr auch in Querrichtung der Platte die Schutzfolie 18 mit Perforationen 20 versehen ist. Aufgrund der in Längs- sowie in Querrichtung der Platte 14 vorhandenen Perforationen 20 ist die Schutzfolie 18 in quadratische Teilbereiche 30 unterteilt. Es bedarf keiner besonderen Hervorhebung, dass die Abstände der Perforationen 20 in Quer- bzw. Längsrichtung den Erfordernissen entsprechend variiert werden können, wobei ggfs. auch rechteckförmige Teilbereiche 30 vorhanden sind.

Schliesslich zeigt Fig. 5 ein Bauteil mit einer Platte gemäss Fig. 4. Von der Schutzfolie 18 wurden vorm Einsetzen der Platte 14 in den Rahmen 26 sowohl an den Stirnseiten als auch an den Längsseiten jeweils ein Streifen abgelöst. Der Rahmen 26 liegt also in der erforderlichen Weise dicht an die Oberfläche der Platte an, so dass in überraschend einfacher Weise einerseits eine dichte und zuverlässige Befestigung der Platte im Rahmen 26 und andererseits ein zuverlässiger Schutz der Platte 14 auch bei der weiteren Bearbeitung bis zum Endverbraucher gewährleistet ist.

## Patentansprüche

1. Verfahren zum Bearbeiten und Aufbringen einer von einer Rolle (8) zuführbaren Schutzfolie (18) auf die Oberfläche eines Bauteiles, das insbesondere aus einem thermoplastischen Kunststoff besteht, dadurch gekennzeichnet, dass die Schutzfolie (18) vor dem Aufbringen auf das als eine Bahn (5) ausgebildete Bauteil mit Perforationslinien (20) versehen wird, dass nachfolgend die mit der Schutzfolie (18) versehene Bahn (4) in Platten (14) unterteilt wird, und dass bei der Weiterverarbeitung der Platte (14) Teile (24, 30) der Schutzfolie (18) entlang den Perforationslinien (20) von der Platte (14) abgelöst werden und die übrigen Teile der Schutzfolie (18) auf der Platte (14) belassen werden.

2. Verfahren nach Anspruch 1, dadurch gekennzeichnet, dass eine unperforierte Schutzfolie (18) von der Rolle (8) abgewickelt wird und dass die Perforationslinien (20) in die Schutzfolie (18) unmittelbar vor dem Aufbringen auf die Bahn (5) eingebracht werden.

3. Verfahren nach Anspruch 1 bis 2, dadurch gekennzeichnet, dass die Schutzfolie (18) mit der Innenfläche (19), in welche eine Perforiereinrichtung (10) beim Perforieren einschneidet, auf die Oberfläche (16) der Bahn (5) aufgebracht wird und/oder dass auf die beiden Oberflächen (16) der Bahn jeweils eine derartige Schutzfolie (18) aufgebracht wird.

4. Verfahren nach einem der Ansprüche 1 bis 3, dadurch gekennzeichnet, dass die Perforationslinien (20) ein Längenverhältnis von Löchern zu Stegen, welche zwischen den genannten Löchern liegen, grösser als 2:1 aufweist und bevorzugt bei 3:1 liegt.

5. Verfahren nach einem der Ansprüche 1 bis 4, dadurch gekennzeichnet, dass die Schutzfolie (18) mit einer Anzahl von in Längsrichtung und/oder in Querrichtung der Schutzfolie (18) verlaufenden, einen wählbaren Abstand zueinander aufweisenden Perforationslinien (20) versehen wird.

6. Bauteil, insbesondere plattenförmiges Wand- oder Türelement einer Duschabtrennung, enthaltend eine Platte, die mit einem Rahmen, Beschlägen oder dgl. versehen ist, dadurch gekennzeichnet, dass die Platte (14) eine nach den Ansprüchen 1 bis 8 aufgebrachte Schutzfolie (18) mit Perforationslinien (20) derart aufweist, dass die Schutzfolie (18) nur im Bereich der freien Oberfläche der Platte (14) vorhanden ist, wobei im Bereich des Rahmens (26), der Beschläge oder dgl. die dort zuvor vorhandenen Teile der Schutzfolie (18) entlang den Perforationslinien (20) entfernt worden ist.

7. Bauteil nach Anspruch 6, dadurch gekennzeichnet, dass die Schutzfolie (18) der Platte (14) durch die Perforationslinien (20) in Streifen (24) oder in rechteckförmige, insbesondere quadratische, Teilbereiche (30) unterteilt ist.

## Claims

1. Method for processing and applying a protective film (18), supplied from a roll (8), to the surface of a construction component which consists in particular of a thermoplastic synthetic material, characterised in that the protective film (18) is provided with lines of perforations (20) before it is applied to the construction component, which is in the form of a strip (5), that the strip (5) provided with the protective film (18) is subsequently subdivided into panels (14), and that in the further processing of the panel (14) parts (24, 30) of the protective film (18) are detached from the panel (14) along the lines of perforations (20) and the remaining parts of the protective film (18) are left on the panel (14).

2. Method according to claim 1, characterised in that an unperforated protective film (18) is unwound from the roll (8) and the lines of perforations (20) are made in the protective film (18) immediately before it is applied to the strip (5).

3. Method according to claims 1 to 2, characterised in that the protective film (18) is applied with its inner surface (19), into which a perforating apparatus (10) cuts during the perforating process, against the surface (16) of the strip (5) and/or that a protective film (18) of this kind is applied to both surfaces (16) of the strip.

4. Method according to one of claims 1 to 3, characterised in that the lines of perforations (20) have a length ratio of holes to connecting strips between said holes of more than 2:1 and preferably 3:1.

5. Method according to one of claims 1 to 4, characterised in that the protective film (18) is provided with a number of lines of perforations (20) extending longitudinally and/or transversely of the protective film (18) and located at a selectable spacing from one another.

6. Construction component, more particularly a panel-shaped wall or door element of a shower partition, containing a panel which is provided with a frame, fittings or the like, characterised in that the panel (14) has a protective film (18), applied according to claims 1 to 5 having lines of perforations (20) so that the protective film (18) is present only in the area of the free surface of the sheet (14), whilst in the area of the frame (26), the fittings or the like, the parts of the protective film (18) previously provided there have been removed along the lines of perforations (20).

7. Construction component according to claim 6, characterised in that the protective film (18) of the panel (14) is subdivided by the lines of perforations (20) into strips (24) or rectangular, particularly square, sections (30).

## Revendications

1. Procédé pour façonner et appliquer une feuille protectrice (18) pouvant être débitée par une bobine (8) sur la surface d'un élément qui est en particulier fait de matière synthétique thermoplastique, caractérisé en ce que la feuille protectrice (18) est munie de lignes de perforations (20) avant d'être appliquée sur l'élément constitué par une bande (5), en ce que, ensuite, la bande (5) munie de la feuille (18) est divisée en plaques (14) et en ce que, dans le cours de la suite du travail de la plaque (14), des parties (24, 30) de la feuille protectrice (18) sont détachées de la plaque (14) le long des lignes de perforations (20) et que les autres parties de la feuille protectrice (18) sont laissées sur la plaque (14).

2. Procédé selon la revendication 1, caractérisé en ce qu'une feuille protectrice non perforée (18) est déroulée de la bobine (8) et que les lignes de perforations (20) sont formées dans la feuille protectrice (18) immédiatement avant son application sur la bande (5).

3. Procédé selon les revendications 1 et 2, caractérisé en ce que la feuille protectrice (18) est appliquée sur la surface (16) de la bande (5) par sa surface interne (19) dans laquelle le dispositif de perforation (10) forme des entailles au moment de la perforation et/ou en ce qu'une feuille protectrice de ce genre est appliquée sur chacune des deux surfaces de la bande (5).

4. Procédé selon l'une des revendications 1 à 3, caractérisé en ce que les lignes de perforations (20) possèdent un rapport de longueur supérieur à 2 : 1 entre les trous et les parties pleines qui subsistent entre les trous précités.

5. Procédé selon l'une des revendications 1 à 4, caractérisé en ce que la feuille protectrice (18) est munie d'un certain nombre de lignes de perforations (20) qui s'étendent dans la direction longitudinale et/ou dans la direction transversale de la feuille protectrice (18), lignes qui présentent un écartement mutuel choisi.

6. Elément, notamment élément de paroi ou de porte d'une cloison de douche présentant la forme d'une plaque, qui comprend une plaque munie d'un châssis, de ferrures ou équivalents, caractérisé en ce que la plaque (14) présente une feuille protectrice (18) munie de lignes de perforations (20), appliquée conformément aux revendications 1 à 5, en ce que la feuille protectrice (18) n'est présente que dans la région de la surface libre de la plaque (14), tandis que, dans la région du châssis (26), des ferrures ou équivalents, les parties de la feuille protectrice (18) qui étaient présentes précédemment à cet endroit ont été enlevées le long des lignes de perforations (20).

7. Elément selon la revendication 6, caractérisé en ce que la feuille protectrice (18) de la plaque (14) est divisée par les lignes de perforations (20) en bandes (24) ou en zones partielles (30) rectangulaires, en particulier carrées.

Fig.1

EP 0 176 918 B1

Fig. 2

Fig. 3

Fig.4

Fig.5